# EUROPEAN PATENT APPLICATION

(11) **EP 4 542 822 A1**
(43) Date of publication of application: **23.04.2025**
(21) Application number: 24207032.4
(22) Date of filing: 16.10.2024
(51) Int. Cl.: H02J 7/00, H02J 50/10, H02J 50/90

(54) **SYSTEM AND METHOD FOR IDENTIFYING SECONDARY BATTERY ID**

(30) Priority: 18.10.2023 KR 20230139853
(71) Applicant: SAMSUNG SDI CO., LTD., Yongin-si, Gyeonggi-do 17084 (KR)
(72) Inventor: PARK, Taeheom, 17084 Yongin-si (KR)
(74) Representative: Marks & Clerk LLP

(57) **Abstract**

A system for identifying a secondary battery identifier (ID) includes a secondary battery (1) having a secondary battery magnet portion (M1) and a wireless charging device (10) includes a wireless charging device magnet portion (M10) configured to charge the secondary battery. The wireless charging device magnet portion includes a polar arrangement corresponding to the secondary battery magnet portion to exert an attractive force between the wireless charging device magnet portion and the secondary battery magnet portion, the secondary battery magnet portion is placed at a position corresponding to the wireless charging device magnet portion, and the wireless charging device magnet portion comprises an ID identifying unit (2) configured to determine that the ID of the secondary battery has been identified, if the secondary battery is charged. Also disclosed is a corresponding method of identifying a secondary battery identifier (ID).

## Description

### BACKGROUND

### 1. Field

Embodiments relate to a system and method for identifying a secondary battery identifier (ID).

### 2. Description of the Related Art

A secondary battery refers to a chargeable and dischargeable battery, unlike a primary battery that is not chargeable. Low-capacity secondary batteries are used in small portable electronic devices such as smartphones, feature phones, laptop computers, digital cameras, and camcorders, and high-capacity secondary batteries are used as motor-driving power sources, power-storing batteries, etc., for hybrid vehicles, electric vehicles, etc. Such a secondary battery may include an electrode assembly including a cathode and an anode, a case accommodating the electrode assembly, an electrode terminal connected to the electrode assembly, etc.

Such secondary batteries may be set with unique identifiers (IDs), respectively. In this way, a state of charge (SOC) and a state of health (SOH), etc., for each of the plurality of secondary batteries may be managed systematically. Whether a secondary battery is a certified genuine product may be determined from a unique ID.

In a method of determining an ID set in each secondary battery, a specific signal is input to the secondary battery, and if a corresponding signal is output from the secondary battery, the output signal is received to identify an ID of the secondary battery and it is determined that the secondary battery is a certified secondary battery.

However, in such a method of identifying the ID of a secondary battery, an ID code of the secondary battery is analyzed, a signal corresponding to the ID code is input to the secondary battery, and if an output signal corresponding thereto is received, the secondary battery may be mistaken for a certified secondary battery.

### SUMMARY

Embodiments include a system for identifying a secondary battery identifier (ID). The system comprises a secondary battery comprising a secondary battery magnet portion and a wireless charging device including a wireless charging device magnet portion configured to charge the secondary battery. The wireless charging device magnet portion includes a polar arrangement corresponding to the secondary battery magnet portion to exert an attractive force between the wireless charging device magnet portion and the secondary battery magnet portion, the secondary battery magnet portion is placed at a position corresponding to the wireless charging device magnet portion, and the wireless charging device magnet portion comprises an ID identifying unit configured to determine that the ID of the secondary battery has been identified, if the secondary battery is charged.

A polar arrangement of the secondary battery magnet portion may differ with each secondary battery according to the ID.

The polar arrangement of the wireless charging device magnet portion respectively may correspond to the polar arrangement of the secondary battery magnet portion for each secondary battery according to the ID.

An N pole and an S pole of the secondary battery magnet portion may be arranged alternately in a staggered manner, an S pole of the wireless charging device magnet portion may be arranged at a position corresponding to the N pole of the secondary battery magnet portion, and an N pole of the wireless charging device magnet portion may be arranged at a position corresponding to the S pole of the secondary battery magnet portion.

An N pole and an S pole of the secondary battery magnet portion may be arranged alternately to form a concentric circle, an S pole of the wireless charging device magnet portion may be arranged at a position corresponding to the N pole of the secondary battery magnet portion, and an N pole of the wireless charging device magnet portion may be arranged at a position corresponding to the S pole of the secondary battery magnet portion.

Embodiments include a method of identifying a secondary battery identifier (ID). The method comprises placing, on a wireless charging device, a secondary battery comprising a secondary battery magnet portion having a polar arrangement structure corresponding to an ID of the secondary battery, magnet-coupling the secondary battery magnet portion of the secondary battery to a wireless charging device magnet portion of the wireless charging device and fixing the secondary battery to the wireless charging device, determining whether the secondary battery is charged, and, if the secondary battery is charged, determining that the ID of the secondary battery has been identified.

The method may further include, if the secondary battery is not charged, determining that the ID of the secondary battery has not been identified.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings in which:
FIG. 1 shows a relationship between components of a system for identifying an identifier (ID) of a secondary battery, according to embodiments of the present disclosure;
FIG. 2 shows a position when a secondary battery is mounted on a wireless charging device, according to embodiments of the present disclosure;
FIG. 3 shows a state in which a secondary battery magnet unit of a secondary battery and a wireless charging device magnet unit of a wireless charging device are arranged such that N and S poles exert an attractive force on each other, according to embodiments of the present disclosure;
FIG. 4 shows a state in which a secondary battery magnet unit of a secondary battery and a wireless charging device magnet unit of a wireless charging device are arranged such that N and S poles do not correspond to each other, according to embodiments of the present disclosure;
FIG. 5 shows a state in which a secondary battery magnet unit of a secondary battery and a wireless charging device magnet unit of a wireless charging device are arranged such that N and S poles exert a repulsive force on each other, according to embodiments of the present disclosure;
FIG. 6 shows an arrangement of N and S poles of a secondary battery magnet unit and a wireless charging device magnet unit, according to other embodiments of the present disclosure; and
FIG. 7 is a flowchart showing a method of identifying an ID of a secondary battery, according to embodiments of the present disclosure.

### DETAILED DESCRIPTION

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items.

When used herein, "comprise, include" and/or "comprising, including" specify mentioned shapes, numbers, steps, operations, members, components, and/or presence of these groups, and do not exclude the presence or addition of one or more different shapes, numbers, operations, members, components, and /or groups. When embodiments of the present disclosure are described, "can" or "may" may include "one or more embodiments of the present disclosure".

The statement that two comparison targets are 'the same' as each other may mean that they are 'substantially the same' as each other. Thus, a case where they are 'substantially the same' as each other may include a case where they have a deviation regarded as a low level, e.g., a deviation of 5 % or less. When a uniform parameter is uniform in a predetermined area, it may mean that it is uniform from an average point of view.

Although 1st, 2nd, etc., may be used to describe various components, these components are not limited by these terms, and are not intended to imply or require sequential inclusion. These terms are only used to distinguish one component from other components, and unless specifically stated to the contrary, a first component may be a second component.

Throughout the specification, unless specially stated to the contrary, each component may be singular or plural.

When a component is arranged on "a top portion (or a bottom portion)" of another component or "on (or under)" the other component, it may mean not only a case where the component is arranged adjacent to a top surface (or a bottom surface) of the other component, but also a case where another component may be interposed between the other component and the component arranged on (or under) the other component.

When a component is described as being "connected", "coupled", or "connected" to another component, it should be understood that the components are directly connected or connectable to each other, but another component may be "interposed" between the components, or the components may be may be "connected", "coupled", or "connected" to each other through another component. When a portion is electrically coupled to another portion, this may include not only a case where they are directly connected to each other, but also a case where they are connected with another device therebetween.

Throughout the specification, "A and/or B" may mean A, B, or A and B unless specially stated otherwise. That is, "and/or" may include all or any combination of a plurality of items listed. "C to D" may mean at least C but not more than D, unless specially stated otherwise.

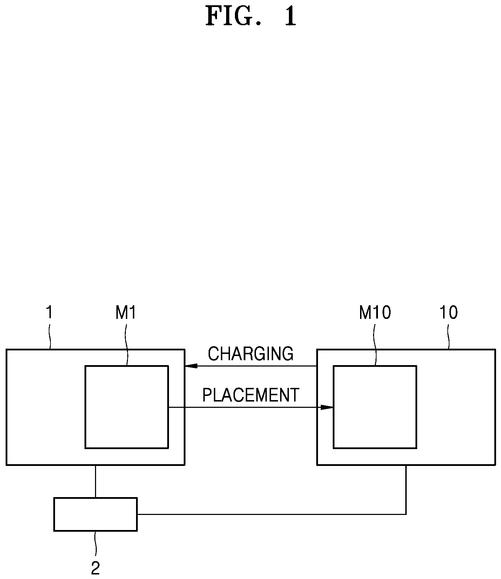

Hereinbelow, with reference to FIGS. 1 to 4, a system for identifying a secondary battery identifier (ID) according to embodiments of the present disclosure will be described with reference to FIGS. 1 to 4.

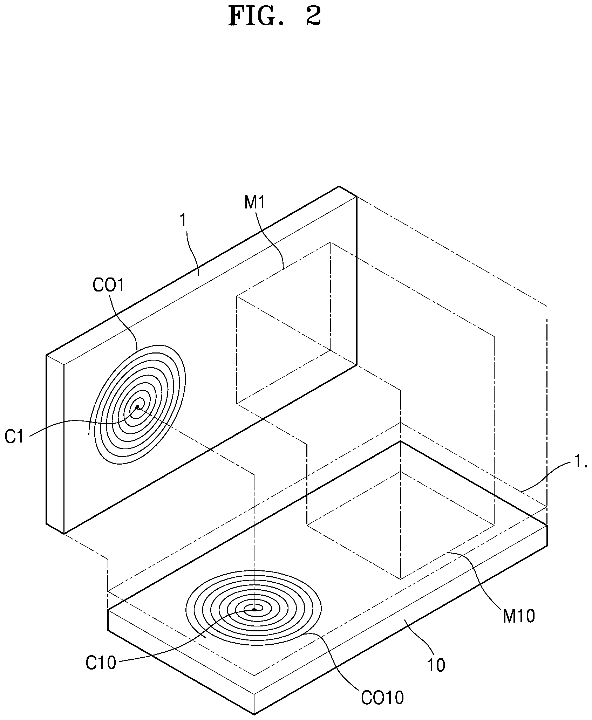

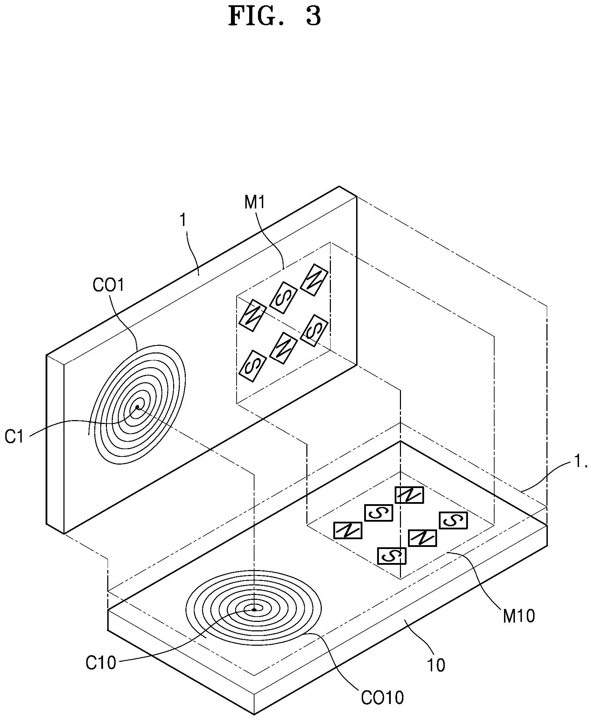

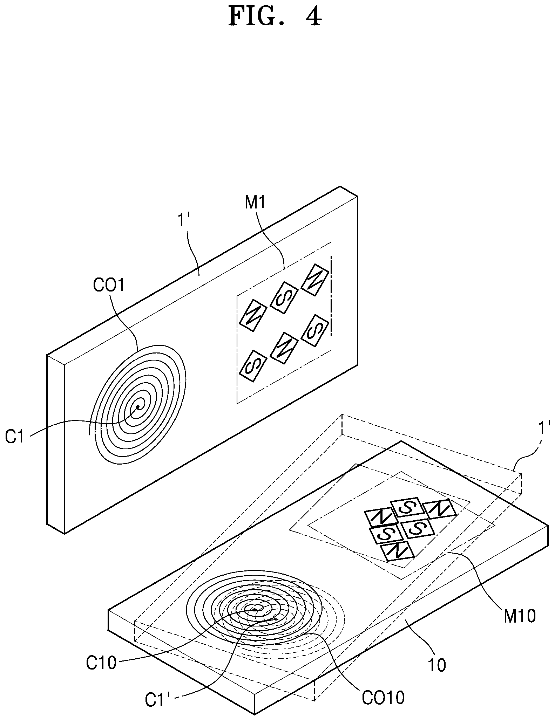

FIG. 1 shows a relationship between components of a system for identifying a secondary battery ID, according to embodiments of the present disclosure. FIG. 2 shows a position when a secondary battery is mounted on a wireless charging device, according to embodiments of the present disclosure. FIG. 3 shows a state in which a secondary battery magnet unit of a secondary battery and a wireless charging device magnet unit of a wireless charging device are arranged such that N and S poles exert an attractive force on each other, according to embodiments of the present disclosure. FIG. 4 shows a state in which a secondary battery magnet unit of a secondary battery and a wireless charging device magnet unit of a wireless charging device are arranged such that N and S poles do not correspond to each other, according to embodiments of the present disclosure.

Referring to FIGS. 1 to 4, a system for identifying a secondary battery ID according to embodiments of the present disclosure may include a secondary battery 1 including a secondary battery magnet portion M1 and a wireless charging device 10 that includes a wireless charging device magnet portion M10 and charges the secondary battery 1.

The wireless charging device magnet portion M10 may include a polar arrangement corresponding to the secondary battery magnet portion M1 to exert an attractive force with the secondary battery magnet portion M1, and the secondary battery magnet portion M1 may be placed at a position corresponding to the wireless charging device magnet portion M10, and include an ID identifying unit 2 that determines whether an ID of the secondary battery 1 is identified.

The secondary battery 1 may be charged through the wireless charging device 10. If the secondary battery 1 is placed on the wireless charging device 10, the secondary battery 1 may be remotely charged by electromagnetic induction of a wireless charging device coil CO10 formed on the wireless charging device 10.

If a secondary battery coil C01 formed on the secondary battery 1 is arranged to correspond to the wireless charging device coil CO10 of the wireless charging device 10, the secondary battery 1 may be charged through the wireless charging device 10. In one or more embodiments, the secondary battery 1 may be charged through the wireless charging device 10 as long as the secondary battery 1 is exactly arranged at a position corresponding to the wireless charging device 10. If the secondary battery 1 is arranged staggered or crooked with respect to the wireless charging device 10 instead of being arranged at the position corresponding to the wireless charging device 10, the secondary battery coil C01 may not be arranged to correspond to the wireless charging coil CO10, such that the secondary battery 1 may not be charged.

To accurately place the secondary battery 1 at the corresponding position of the wireless charging device 10, the secondary battery magnet portion M1 formed on the secondary battery 1 may need to be accurately placed at a position corresponding to the wireless charging device magnet portion M10 formed on the wireless charging device 10. In one or more embodiments, the secondary battery magnet portion M1 may be placed at a position corresponding to the wireless charging device magnet portion M10, thereby charging the second battery 1.

The secondary battery magnet portion M1 may include the ID identifying unit 2 that determines whether the ID of the secondary battery 1 is identified if the secondary battery 1 is charged through the wireless charging device 10. If the secondary battery 1 is placed on the wireless charging device 10, the ID identifying unit 2 may determine whether the secondary battery 1 is charged through the wireless charging device 10. The ID identifying unit 2 may determine that the ID of the secondary battery 1 is identified if the secondary battery 1 is charged through the wireless charging device 10.

According to one or more embodiments, a polar arrangement of the secondary battery magnet portion M1 may differ with a secondary battery according to a unique ID included in each secondary battery. To correspond to a unique ID included in each secondary battery, a polar arrangement of the secondary battery magnet portion M1 may also be formed to have a unique polar arrangement.

A polar arrangement of the wireless charging device magnet portion M10 may also correspond to the polar arrangement of the secondary battery magnet portion M1 for each secondary battery. To correspond to a unique ID included in each secondary battery, the polar arrangement of the wireless charging device magnet portion M10 may also be formed to have a unique polar arrangement. The polar arrangement of the wireless charging device magnet portion M10 having a unique polar arrangement may correspond to the polar arrangement of the secondary battery magnet portion M1 to exert an attractive force therebetween.

Thus, if the secondary battery 1 is charged through the wireless charging device 10, it may correspond to a case where the polar arrangement of the secondary battery magnet portion M1 corresponding to the unique ID of the secondary battery 1 and the polar arrangement of the wireless charging device magnet portion M10 correspond to each other, such that the ID identifying unit 2 may determine that the unique ID of the secondary battery 1 is identified, together with charging, if charging is successfully performed.

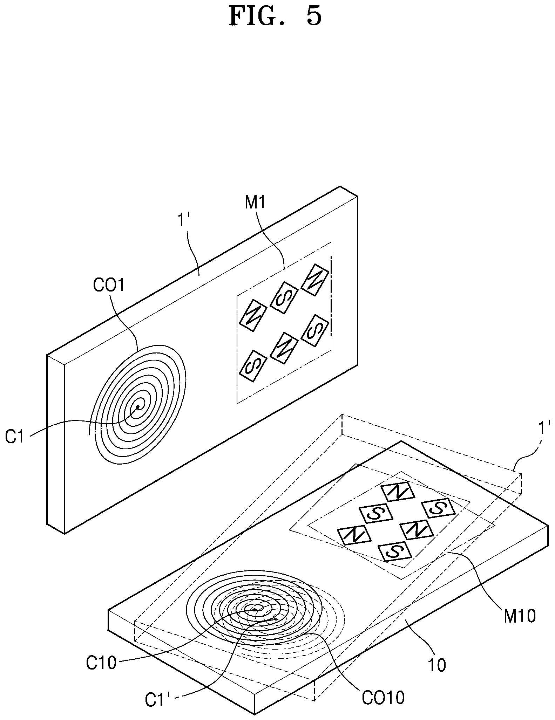

If the polar arrangement of the secondary battery magnet portion and the polar arrangement of the wireless charging device magnet portion do not correspond to each other, as shown in FIG. 4, or the polar arrangement of the secondary battery magnet portion and the polar arrangement of the wireless charging device magnet portion are formed to exert a repulsive force therebetween as shown in FIG. 5, the secondary battery 1 may not be accurately placed at the corresponding position of the wireless charging device 10, such that the secondary battery 1 may not be charged by the wireless charging device 10.

In an example embodiment, the ID identifying unit 2 may identify a situation where a secondary battery 1' is not charged, and determine that a unique ID of the secondary battery 1' is not identified. In this example embodiment, the secondary battery 1' may be determined as an uncertified secondary battery 1'.

In some embodiments, the ID identifying unit 2 may be implemented as a server on a separate computer connected with the secondary battery 1 and the wireless charging device 10 through a communication network. The ID identifying unit 2 may receive a signal regarding whether to perform charging from the secondary battery 1 or the wireless charging device 10 and determine whether to charge the secondary battery 1 through corresponding signal information and at the same time, determine whether the ID of the secondary battery 1 is identified.

If magnets having opposite polarities are attached to the wireless charging device 10 and the secondary battery 1, respectively, and the secondary battery 1 is placed at a position other than a correct position on the wireless charging device 10, the secondary battery 1 is pushed using a magnetic force formed from the magnet of the wireless charging device 10 to cause the secondary battery 1 to be positioned at a defined position of the wireless charging device 10, thereby improving the efficiency of wireless charging.

If the uncertified secondary battery 1' is placed at a chargeable position of the wireless charging device 10, the wireless charging device 10 may push the secondary battery 1' using a magnet force to cause the secondary battery 1' to leave the charging position of the wireless charging device 10, thereby preventing the secondary battery 1' from being charged.

With reference to FIG. 5, a system for identifying a secondary battery ID according to embodiments of the present disclosure will be described. Matters not shown in FIG. 5 will refer to matters shown in FIGS. 1 to 4 and the description corresponding thereto.

FIG. 5 shows a state in which a secondary battery magnet unit of a secondary battery and a wireless charging device magnet unit of a wireless charging device are arranged such that N and S poles exert a repulsive force on each other, according to embodiments of the present disclosure.

Referring to FIG. 5, in the secondary battery 1 according to embodiments of the present disclosure, the secondary battery magnet portion M1 may include an N pole and a S pole being arranged alternately in a staggered manner, and the wireless charging device magnet portion M10 may include an S pole at a position corresponding to the N pole of the secondary battery magnet portion M1 and an N pole at a position corresponding to the S pole of the secondary battery magnet portion M1.

Using a structure where the N pole and the S pole are arranged alternately in a staggered manner, in embodiments, even when the secondary battery magnet portion M1 may have a slight error with respect to a position corresponding to the wireless charging device magnet portion M10, the wireless charging device magnet portion M10 may move the secondary battery magnet portion M1 with a magnet force to cause the secondary battery magnet portion M1 to be placed at a defined position.

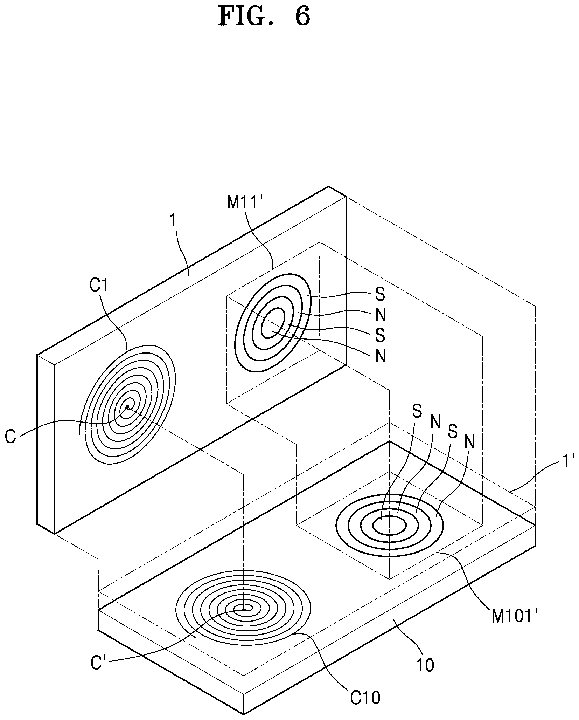

With reference to FIG. 6, a system for identifying a secondary battery ID according to other embodiments of the present disclosure will be described. Matters not shown in FIG. 6 will refer to matters shown in FIGS. 1 to 4 and the description corresponding thereto.

FIG. 6 shows an arrangement of N and S poles of a secondary battery magnet unit and a wireless charging device magnet unit, according to other embodiments of the present disclosure.

Referring to FIG. 6, in a secondary battery magnet portion M11', an N pole and an S pole may be arranged alternately to form a concentric circle. In a wireless charging device magnet portion M101', an S pole may be arranged at a position corresponding to the N pole of the secondary battery magnet portion M11' and an N pole may be arranged at a position corresponding to the S pole of the secondary battery magnet portion M11'.

Using a structure where the N pole and the S pole are arranged staggered to form a concentric circle, in embodiments, even when the secondary battery magnet portion M11' may have a slight error with respect to a position corresponding to the wireless charging device magnet portion M101', the wireless charging device magnet portion M101' may move the secondary battery magnet portion M11' with a magnet force to cause the secondary battery magnet portion M11' to be placed at a defined position.

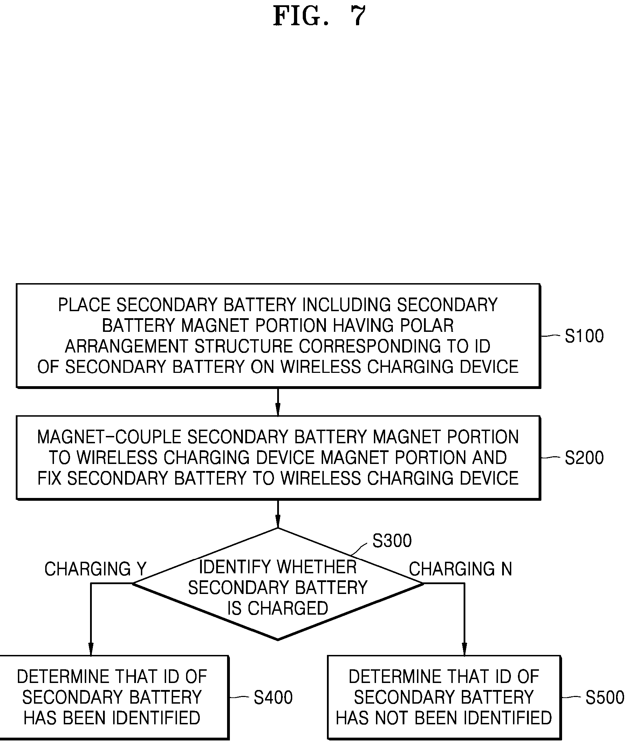

With reference to FIG. 7, a system for identifying a secondary battery ID according to embodiments of the present disclosure will be described. Matters not shown in FIG. 7 will refer to matters shown in FIGS. 1 to 6 and the description corresponding thereto.

FIG. 7 is a flowchart showing a method of identifying an ID of a secondary battery, according to embodiments of the present disclosure.

Referring to FIG. 7, the method of identifying the ID of the secondary battery according to embodiments of the present disclosure may include operation S100 of placing the secondary battery 1 on the wireless charging device 10 in which the secondary battery 1 includes the secondary battery magnet portion M1 having a polar arrangement structure corresponding to the ID of the secondary battery 1, operation S200 of magnet-coupling the secondary battery magnet portion M1 of the secondary battery 1 to the wireless charging device magnet portion M10 of the wireless charging device 10 and fixing the secondary battery 1 to the wireless charging device 10, and operation S300 of identifying whether the secondary battery 1 is charged. In an example embodiment, the method may include operation S400 of determining that the ID of the secondary battery 1 is identified if the secondary battery 1 is charged. The method may also include operation S500 of determining that the ID of the secondary battery 1 is not identified if the secondary battery 1 is not charged.

In this way, based on whether the secondary battery is charged or not through the wireless charging device, the ID of the secondary battery may be easily and accurately identified, and the ID of the secondary battery may also be identified in a process of charging the secondary battery through the wireless charging device.

The system and method of identifying a secondary battery ID according to embodiments of the present disclosure may easily and accurately identify the ID of the secondary battery, based on whether or not the secondary battery is charged through the wireless charging device.

The system and method of identifying a secondary battery ID according to embodiments of the present disclosure may not need a separate ID identifying device other than a wireless charging device, and ID identification may also be performed during charging through the wireless charging device.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A system for identifying a secondary battery identifier (ID), the system comprising:
a secondary battery comprising a secondary battery magnet portion; and
a wireless charging device comprising a wireless charging device magnet portion and configured to charge the secondary battery,
wherein:
the wireless charging device magnet portion comprises a polar arrangement corresponding to the secondary battery magnet portion to exert an attractive force between the wireless charging device magnet portion and the secondary battery magnet portion,
the secondary battery magnet portion is placed at a position corresponding to the wireless charging device magnet portion, and
the wireless charging device magnet portion comprises an ID identifying unit configured to determine that the ID of the secondary battery has been identified, if the secondary battery is charged.

2. The system as claimed in claim 1, wherein a polar arrangement of the secondary battery magnet portion differs with each secondary battery according to the ID.

3. The system as claimed in claim 2, wherein the polar arrangement of the wireless charging device magnet portion respectively corresponds to the polar arrangement of the secondary battery magnet portion for each secondary battery according to the ID.

4. The system as claimed in any preceding claim, wherein:
an N pole and an S pole of the secondary battery magnet portion are arranged alternately in a staggered manner,
an S pole of the wireless charging device magnet portion is arranged at a position corresponding to the N pole of the secondary battery magnet portion, and
an N pole of the wireless charging device magnet portion is arranged at a position corresponding to the S pole of the secondary battery magnet portion.

5. The system as claimed in any one of claims 1 to 3, wherein:
an N pole and an S pole of the secondary battery magnet portion are arranged alternately to form a concentric circle,
an S pole of the wireless charging device magnet portion is arranged at a position corresponding to the N pole of the secondary battery magnet portion, and
an N pole of the wireless charging device magnet portion is arranged at a position corresponding to the S pole of the secondary battery magnet portion.

6. A method of identifying a secondary battery identifier (ID), the method comprising:
placing, on a wireless charging device, a secondary battery comprising a secondary battery magnet portion having a polar arrangement structure corresponding to an ID of the secondary battery;
magnet-coupling the secondary battery magnet portion of the secondary battery to a wireless charging device magnet portion of the wireless charging device and fixing the secondary battery to the wireless charging device;
determining whether the secondary battery is charged; and
if the secondary battery is charged, determining that the ID of the secondary battery has been identified.

7. The method as claimed in claim 6, further comprising, if the secondary battery is not charged, determining that the ID of the secondary battery has not been identified.
